# EUROPÄISCHE PATENTSCHRIFT

(11) **EP 0 381 973 B1**
(45) Veröffentlichungstag und Bekanntmachung des Hinweises auf die Patenterteilung: **01.06.1994**
(21) Anmeldenummer: 90101130.4
(22) Anmeldetag: 20.01.1990
(51) Int. Cl.: C08F 8/30, C08F 210/02

(54) **Verfahren zur Herstellung von Nitrilgruppen enthaltenden Copolymerisaten auf Basis von Ethylen**
Process for the manufacture of copolymers of ethylene containing nitrilic groups
Procédé de préparation de copolymères contenant des groupements nitriles à base d'éthylène

(30) Priorität: 27.01.1989 DE 3902389
(43) Veröffentlichungstag der Anmeldung: 16.08.1990
(73) Patentinhaber: BASF Aktiengesellschaft, 67063 Ludwigshafen (DE)
(72) Erfinder: Buback, Michael, Prof. Dr., D-3406 Bovenden (DE); Rohde, Stefan, D-3400 Goettingen (DE)

(56) Entgegenhaltungen:
- US-A- 3 337 517
- US-A- 4 116 784
- DATABASE WPIL, Nr. 85-23682, Derwent Publications Ltd, London, GB; & JP-A-52 084 268

## Beschreibung

Die vorliegende Erfindung betrifft ein Verfahren zur Herstellung von Nitrilgruppen enthaltenden Copolymerisaten A auf Basis von Ethylen, die aus
a) überwiegenden Anteilen der Struktureinheit des Ethylens,
b) untergeordneten Anteilen der Struktureinheit der allgemeinen Formel la 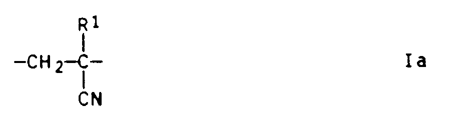 in der R¹ Wasserstoff oder eine C1-C4-Alkylgruppe bedeutet, sowie
c) gewünschtenfalls aus Struktureinheiten, welche sich von weiteren Comonomeren ableiten, aufgebaut sind.

Aus den JP-B 68-18450, JP-B 71-03071, JP-B 85-23682 und der US-A 4 116 784 ist es bekannt, Copolymerisate aus Ethylen und Acrylnitril durch radikalische Polymerisation herzustellen. Nachteilig an diesen Verfahren ist jedoch, daß beide Monomere nur schlecht miteinander copolymerisieren und daß man hierbei nur Copolymerisate mit relativ geringen Molmassen erhält, die nur von begrenztem wirtschaftlichen Interesse sind.

Weiterhin ist die polymeranaloge Umsetzung von Copolymerisaten des Ethylens und von Acrylsäure-oder Methacrylsäureestern mit Ammoniak bekannt (US-A 3 337 517, US-A 3 485 785, FR-A 1 501 193). Bei dieser Reaktion, die bei 180 bis 300 _{°} C und unter einem Druck von bis zu 60 bar vorgenommen wird, werden die von dem Acrylsäure- bzw. von dem Methacrylsäureester stammenden Alkoxycarbonylgruppen gänzlich oder zum Teil durch Carbonamidgruppen ersetzt.

Der Erfindung lag nun ein neues Verfahren als Aufgabe zugrunde, das es auf technisch einfachere und wirtschaftlichere Weise als bisher gestattet, zu Copolymerisaten zu gelangen, welche aus den Struktureinheiten des Ethylens, des Acrylnitrils oder von a-Alkylacrylnitrilen und gewünschtenfalls von weiteren Comonomeren aufgebaut sind. Außerdem erstreckt sich die Aufgabe auf die dadurch erhältlichen Copolymerisate, sowie auf deren Verwendung zur Herstellung von Folien und Formkörpern sowie als Überzugsmaterialien.

Demgemäß wurde ein Verfahren zur Herstellung von Nitrilgruppen enthaltenden Copolymerisaten A auf Basis von Ethylen, die aus
a) überwiegenden Anteilen der Struktureinheit des Ethylens,
b) untergeordneten Anteilen der Struktureinheit der allgemeinen Formel la 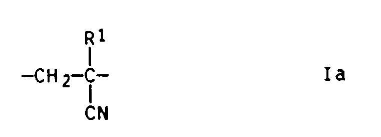 in der R¹ Wasserstoff oder eine C1-C4-Alkylgruppe bedeutet, sowie
c) gewünschtenfalls aus Struktureinheiten, welche sich von weiteren Comonomeren ableiten,

aufgebaut sind, gefunden, welches dadurch gekennzeichnet ist, daß man ein Basis-Copolymerisat B aus überwiegenden Anteilen Ethylen, untergeordneten Anteilen eines a-ß-ungesättigten Carbonsäureesters der allgemeinen Formel Ib 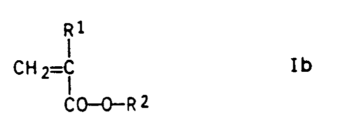 in der R² für eine C₁-C₈-Alkylgruppe steht, sowie gewünschtenfalls weiteren Comonomeren bei 120 bis 280 °C und 150 bis 2 500 bar mit Ammoniak umsetzt.

Der Anteil der Ethyleneinheiten in den erfindungsgemäßen Copolymerisaten beträgt vorzugsweise 55 bis 95 mol%, derjenige der Einheiten la 5 bis 40 mol% und derjenige der Einheiten der sonstigen Comonomeren bis zu 40, insbesondere bis zu 20 mol%. Besonders bevorzugt werden Copolymerisate mit 80 bis 95 mol% Ethyleneinheiten und 5 bis 20 mol% der Einheiten la. Entsprechend diesen Molverhältnissen geht man bei dem erfindungsgemäßen Verfahren von Basis-Copolymeren B analoger Zusammensetzung aus.

Diese Basis-Copolymeren sind bekannt oder auf bekannte Weise durch radikalische Polymerisation in praktisch jedem gewünschten Polymersationsgrad erhältlich, welcher vorzugsweise mittleren Molmassen von 10 000 bis 200 000 entspricht.

Als Comonomere Ib der Basis-Copolymeren B kommen in erster Linie die Ester der Acrylsäure und der Methacrylsäure in Betracht, daneben aber auch von solchen Säuren, bei denen R¹ einen höheren Alkylrest wie die Ethyl-, die n-Propyl- oder die n-Butylgruppe bedeutet. Da der Alkoholrest R² in diesen Estern ohnehin wieder abgespalten wird, ist seine chemische Natur von untergeordneter Bedeutung, jedoch bevorzugt man im allgemeinen besonders die Methylester und daneben die Ethyl-, n-Propyl- und n-Butylester.

Weitere Comonomere, aus denen die erfindungsgemäßen Copolymerisate A und damit auch die Basis-Copolymerisate B aufgebaut sein können, sind beispielsweise C₄-C₆-Olefine wie But-1-en, Pent-1-en und Hex-1-en, Vinylaromaten wie vornehmlich Styrol, ungesättigte Alkohole wie Allylalkohol und bifunktionelle Monomere wie vor allem Butadien und Isopren.

Nimmt man die polymeranaloge Umsetzung mit dem Ammoniak nicht vollständig vor, so können die erfindungsgemäßen Copolymeren A auch noch Amidfunktionen oder die ursprünglichen Estergruppierungen enthalten.

Das erfindungsgemäße Verfahren wird bei Temperaturen von 120 bis 280 _{°} C und Drücken von 150 bis 2500 bar durchgeführt. Bevorzugt sind dabei Temperaturen zwischen 200 und 260 °C und Drücke von 1 000 bis 2 000 bar. Unter diesen Bedingungen liegt das eingesetzte Ammoniak in fluider Form, also in überkritischem Zustand vor. Es empfiehlt sich, das Basis-Copolymerisat B vorzulegen und dann das Ammoniak hinzuzugeben.

Die Menge des Ammoniaks hängt vom gewünschten Umsetzungsgrad der Estergruppierungen ab und ist daher mindestens äquimolar zur Anzahl der umzusetzenden Gruppierungen. Da im allgemeinen ein vollständiger Umsatz angestrebt wird, empfiehlt es sich zur Beschleunigung der Reaktion, das Ammoniak im bis zu 100-fachen molaren Überschuß einzusetzen. Noch größere Überschüsse können von Vorteil sein, weil das fluide Ammoniak als Lösungsmittel für die Polymeren fungiert.

Zunächst reagieren die im Copolymerisat vorliegenden Estergruppen mit dem Ammoniak zu Amidderivaten. Aus diesen bilden sich durch Abspalten von Wasser die entsprechenden Nitrile. Die Reaktion wird so lange durchgeführt, bis der überwiegende Teil der primär entstandenen Amidfunktionen zu Nitrilfunktionen dehydratisiert ist, was durch spektroskopische Methoden, beispielsweise durch Infrarot- oder Kernresonanzspektroskopie verfolgt werden kann. Für den technischen Betrieb kann die genaue Reaktionsdauer durch einige Vorversuche ermittelt werden. Sie liegt üblicherweise zwischen 2 und 50 Stunden, in der Regel unterhalb von 30 Stunden. Da es sich um eine heterogene Reaktion handelt, hängt die Reaktionsgeschwindigkeit im übrigen entscheidend von einer intensiven Durchmischung des Basis-Copolymerisats B mit dem Ammoniak ab. Man führt die Umsetzung daher vorzugsweise in Rührautoklaven oder Extrudern aus, wobei sich die Reaktionszeiten bis auf wenige Minuten reduzieren lassen.

Weiterhin kann sich die Mitverwendung inerter Lösungsmittel wie beispielsweise Toluol oder Ethylbenzol empfehlen, um hierdurch die Viskosität der Copolymeren herabzusetzen und damit deren Dispergierbarkeit in der Ammoniakphase zu erleichtern.

Die erfindungsgemäß erhältlichen Copolymerisate sind thermoplastisch und eignen sich hervorragend zur Herstellung hochwertiger Folien und Formkörper nach allen üblichen Formgebungsverfahren, vor allem nach der Spritzgußtechnik. Weiterhin eignen sich diese Polymerisate in Form von Dispersionen oder Lösungen als Überzugsmittel für Gegenstände aller Art, sei es für schützende oder dekorative Zwecke.

Das erfindungsgemäße Verfahren bietet den Vorteil, daß damit eine Vielzahl von Nitrilgruppen tragenden Copolymeren auf Basis von Ethylen technisch zugänglich werden und daß es darüber hinaus den Einsatz der toxischen Nitrile wie Acrylnitril als Monomere entbehrlich macht, wie er für eine unmittelbare Copolymerisation der Nitrile, des Ethylens und der weiteren Monomeren erforderlich wäre.

### Beispiel

2 g eines statistischen Copolymerisats aus 92,2 mol% Ethylen und 7,8 mol% n-Butylacrylat der mittleren Molmasse 25 000 wurden in einem Autoklaven vorgelegt und danach bei 250 _{°} C und 1 500 bar mit 30 g Ammoniak umgesetzt. Nach einer Reaktionsdauer von 24 Stunden erhielt man ein Copolymerisat, dessen n-Butoxycarbonylgruppen zu 51,3 % durch Nitrilgruppen ersetzt waren, wie mittels Infrarotspektroskopie festgestellt wurde. Nach 48-stündiger Reaktionszeit betrug der entsprechende Nitrilgruppenanteil 88,5 %.

## Patentansprüche (Patentansprüche für folgende(n) Vertragsstaat(en) : BE, DE, FR, GB, IT, NL)

1. Verfahren zur Herstellung von Nitrilgruppen enthaltenden Copolymerisaten A auf Basis von Ethylen, die aus
a) überwiegenden Anteilen der Struktureinheit des Ethylens,
b) untergeordneten Anteilen der Struktureinheit der allgemeinen Formel la 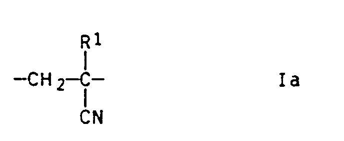 in der R¹ Wasserstoff oder eine C1-C4-Alkylgruppe bedeutet, sowie
c) gewünschtenfalls aus Struktureinheiten, welche sich von weiteren Comonomeren ableiten,
aufgebaut sind, dadurch gekennzeichnet, daß man ein Basis-Copolymerisat B aus überwiegenden Anteilen Ethylen, untergeordneten Anteilen eines a,ß-ungesättigten Carbonsäureesters der allgemeinen Formel Ib 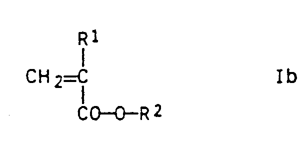 in der R² für eine C₁-C₈ -Alkylgruppe steht, sowie gewünschtenfalls weiteren Comonomeren bei 120 bis 280 °C und 150 bis 2 500 bar mit Ammoniak umsetzt.

2. Copolymerisate A, erhältlich nach dem Verfahren gemäß Anspruch 1.

3. Verwendung der Copolymerisate A gemäß Anspruch 2 zur Herstellung von Folien und Formkörpern sowie als Überzugsmaterialien.

## Patentansprüche (Patentansprüche für folgende(n) Vertragsstaat(en) : ES)

1. Verfahren zur Herstellung von Nitrilgruppen enthaltenden Copolymerisaten A auf Basis von Ethylen, die aus
a) überwiegenden Anteilen der Struktureinheit des Ethylens,
b) untergeordneten Anteilen der Struktureinheit der allgemeinen Formel la 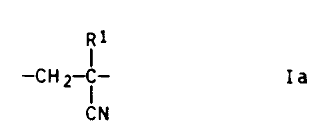 in der R¹ Wasserstoff oder eine C1-C4-Alkylgruppe bedeutet, sowie
c) gewünschtenfalls aus Struktureinheiten, welche sich von weiteren Comonomeren ableiten,
aufgebaut sind, dadurch gekennzeichnet, daß man ein Basis-Copolymerisat B aus überwiegenden Anteilen Ethylen, untergeordneten Anteilen eines a,ß-ungesättigten Carbonsäureesters der allgemeinen Formel Ib 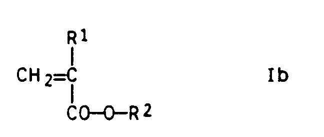 in der R² für eine C₁-C₈-Alkylgruppe steht, sowie gewünschtenfalls weiteren Comonomeren bei 120 bis 280 °C und 150 bis 2 500 bar mit Ammoniak umsetzt.

2. Verfahren zur Herstellung von Folien, Formkörpern und überzugsmaterialien, dadurch gekennzeichnet, daß man hierzu die nach dem Verfahren von Anspruch 1 erhältlichen Copolymerisate A verwendet.

## Claims (Claims for the following Contracting State(s) : BE, DE, FR, GB, IT, NL)

1. A process for preparing a cyano-containing copolymer A based on ethylene which is composed of
a) predominant proportions of the structural unit of ethylene,
b) minor proportions of the structural unit of the general formula la 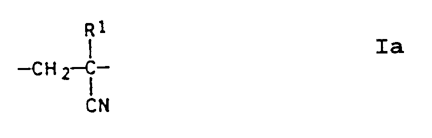 where R¹ is hydrogen or C₁-C₄-alkyl, and
c) if desired structural units derived from other comonomers,
which comprises reacting a base copolymer B formed from predominant proportions of ethylene, minor proportions of an a,ß-unsaturated carboxylic ester of the general formula Ib 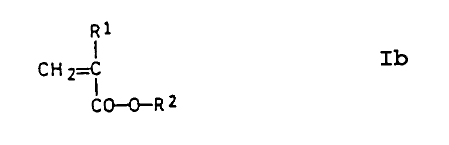 where R² is C₁-C₈-alkyl, and if desired further comonomers, with ammonia at 120-280 °C and 150-2,500 bar.

2. A copolymer A obtainable by the process of claim 1.

3. The use of a copolymer A as claimed in claim 2 for producing films and moldings and as a coating material.

## Claims (Claims for the following Contracting State(s) : ES)

1. A process for preparing a cyano-containing copolymer A based on ethylene which is composed of
a) predominant proportions of the structural unit of ethylene,
b) minor proportions of the structural unit of the general formula la 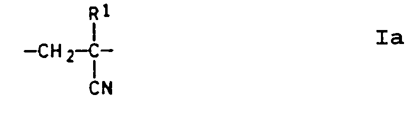 where R¹ is hydrogen or C₁-C₄-alkyl, and
c) if desired structural units derived from other comonomers,
which comprises reacting a base copolymer B formed from predominant proportions of ethylene, minor proportions of an a,ß-unsaturated carboxylic ester of the general formula Ib 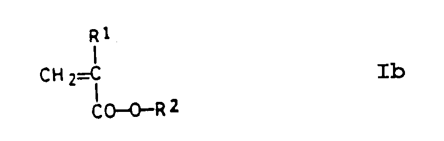 where R² is C₁-C₈-alkyl, and if desired further comonomers, with ammonia at 120-280 °C and 150-2,500 bar.

2. A process for producing films, moldings and coating materials, which comprises using a copolymer A obtainable by the process of claim 1.

## Revendications (Revendications pour l'(les) Etat(s) contractant(s) suivant(s) : suivants : BE, DE, FR, GB, IT, NL)

1. Procédé de préparation de copolymères A à base d'éthylène contenant des groupements nitrile, lesquels copolymères sont constitués par:
a) des parts prédominantes du motif structural de l'éthylène,
b) de moindres parts du motif structural de formule générale la 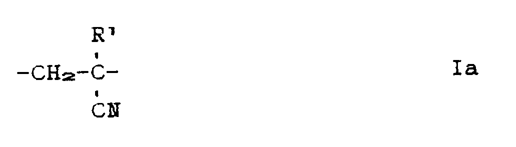 dans laquelle R¹ représente un atome d'hydrogène ou un groupement alkyle en C₁-C₄ et, le cas échéant, par
c) des motifs structuraux qui dérivent d'autres comonomères,
caractérisé en ce que l'on fait réagir avec de l'ammoniac, à une température de 120 à 280 °C et sous une pression de 150 à 2500 bar, un copolymère de base B composé de parts prédominantes d'éthylène, de moindres parts d'un ester d'acide carboxylique a,ß-insaturé de formule générale Ib 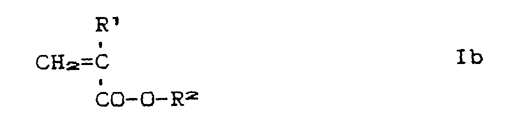 dans laquelle R² est mis pour un groupement alkyle en C₁-C₈, et, le cas échéant, d'autres comonomères.

2. Copolymères A, obtenus par le procédé selon la revendication 1.

3. Utilisation des copolymères A selon la revendication 2 pour la fabrication de feuilles et de corps moulés, ainsi que comme matériaux de revêtement.

## Revendications (Revendications pour l'(les) Etat(s) contractant(s) suivant(s) : suivant : ES)

1. Procédé de préparation de copolymères A à base d'éthylène contenant des groupements nitrile, lesquels copolymères sont constitués par:
a) des parts prédominantes du motif structural de l'éthylène,
b) de moindres parts du motif structural de formule générale la 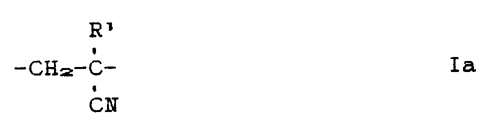 dans laquelle R¹ représente un atome d'hydrogène ou un groupement alkyle en C, -C₄ et, le cas échéant, par
c) des motifs structuraux qui dérivent d'autres comonomères,
caractérisé en ce que l'on fait réagir avec de l'ammoniac, à une température de 120 à 280 °C et sous une pression de 150 à 2500 bar, un copolymère de base B composé de parts prédominantes d'éthylène, de moindres parts d'un ester d'acide carboxylique a,ß-insaturé de formule générale Ib 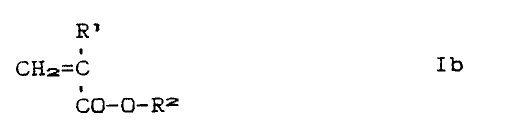 dans laquelle R² est mis pour un groupement alkyle en C₁-C₈, et, le cas échéant, d'autres comonomères.

2. Procédé de fabrication de feuilles, de corps moulés et de matériaux de revêtement, caractérisé en ce que l'on utilise à cette fin les copolymères A obtenus par le procédé de la revendication 1.
